(19) Europäisches Patentamt
European Patent Office
Office européen des brevets

(11) **EP 0 819 915 B1**

(12) **EUROPÄISCHE PATENTSCHRIFT**

(45) Veröffentlichungstag und Bekanntmachung des Hinweises auf die Patenterteilung:
**09.10.2002 Patentblatt 2002/41**

(51) Int Cl.$^7$: **G01D 5/36**

(21) Anmeldenummer: **97111634.8**

(22) Anmeldetag: **09.07.1997**

(54) **Vorrichtung zur Filterung von Oberwellen-Signalanteilen**

Device for filtering harmonic signal components

Dispositif de filtrage des composants harmoniques d'un signal

(84) Benannte Vertragsstaaten:
**AT CH DE FR GB IT LI**

(30) Priorität: **16.07.1996 DE 19628602**

(43) Veröffentlichungstag der Anmeldung:
**21.01.1998 Patentblatt 1998/04**

(73) Patentinhaber: **Dr. Johannes Heidenhain GmbH
83292 Traunreut (DE)**

(72) Erfinder: **Holzapfel, Wolfgang, Dr.
83119 Obing (DE)**

(56) Entgegenhaltungen:
**EP-A- 0 541 828        EP-A- 0 714 015**

**Beschreibung**

Die vorliegende Erfindung betrifft eine Vorrichtung zur Filterung von ungeradzahligen Oberwellen-Signalanteilen, die insbesondere ein Signal verfälschen, das in einer Positionsmeßeinrichtung zur Bestimmung der Lageänderung zweier relativ zueinander beweglicher Objekte herangezogen wird.

In bekannten inkrementalen Positionsmeßeinrichtungen wird üblicherweise eine periodische Maßstabteilung mit einer ebenfalls periodischen Abtaststruktur abgetastet und das resultierende Signal als Meßsignal weiterverwertet. Im Idealfall der Abtastung liegt hierbei ein möglichst exakt sinusförmiges Signal vor. In diesem Fall ist eine weitere Signalunterteilung durch bekannte Interpolationsmethoden möglich. Üblicherweise weicht die Ausgangssignalform aber von der idealen Sinusform ab, wofür verschiedene Ursachen verantwortlich sind. Beispielsweise verfälschen Abweichungen in den Teilungsverhältnissen von Maßstabteilung und Abtastteilung von einer idealen Teilung sowie Kantenunschärfen bei den Maßstab-Teilungsstegen das resultierende Signal. Die auszuwertenden Signale sind deshalb im Regelfall mit Oberwellen bzw. harmonischen Oberschwingungen behaftet. Zur exakten Positionsbestimmung in inkrementalen Positionsmeßeinrichtungen sind jedoch möglichst oberwellenfreie Abtastsignale erforderlich. Zur Gewinnung möglichst oberwellenfreier Meßsignale in inkrementalen Winkel- und Längenmeßsystemen sind daher bereits eine Reihe von Vorschlägen bekannt geworden. Die Wirkung sämtlicher, hierzu angewandter Filterverfahren innerhalb derartiger Vorrichtungen basiert stets auf einer möglichst optimierten Überlagerung verschiedener, zueinander phasenverschobener Signalanteile durch eine spezielle Ausgestaltung der verwendeten Abtastplatte. In einer Reihe von Anwendungsfällen werden dabei nur bestimmte Oberwellen eliminiert, da eine Filterung sämtlicher vorhandener Oberwellenanteile den Modulationsgrad der Grundwelle zu stark beeinträchtigen würde. Die zur Eliminierung von Oberwellenanteilen erforderlichen phasenverschobenen Signalanteile werden hierbei an unterschiedlichen Abtastorten auf Seiten der Abtastplatte erzeugt.

Im Verlauf der nachfolgenden Beschreibung sei die Ausdehnung bzw. Länge der Abtastfläche, die zur gewünschten Filterung notwendig ist, als Filterlänge bezeichnet. Im Normalfall erstreckt sich diese in Meßrichtung, das heißt in derjenigen Richtung, in der eine Relativverschiebung zwischen Maßstabteilung und Abtastteilung erfolgt.

Hinsichtlich der verschiedenen bekannten Filterprinzipien lassen sich folgende Ausgestaltungen der Filteranordnung auf Seiten der Abtastplatte unterscheiden.

So sind sogenannte adiabatische Filteranordnungen z.B. aus der EP 157 177 bekannt, in denen innerhalb der Abtastfläche der Abtastplatte eine "langsame" Änderung der Stegmittenpositionen über das komplette Abtastfeld nach einer vorgegebenen Funktion vorgesehen ist. Die komplette Filterlänge beträgt typischerweise eine Größenordnung von 10 bis 100 Teilungsperioden der Maßstabteilung bzw. Abtastteilung.

Ferner sind auch bereits gemischte Filteranordnungen bekannt, beispielsweise aus der EP 645 607. Hierbei wird die normalerweise nach der oben erwähnten Funktion geordnete Folge von Stegverschiebungen eines adiabatischen Filters nach einem deterministischen oder aber auch zufälligen Verfahren gemischt. Die hierbei resultierende, effektive Filterlänge beträgt etwa 3 bis 10 Teilungsperioden.

Ebenfalls bereits bekannt sind kurzperiodische Filteranordnungen, etwa aus der EP 541 828. Hierunter sei eine periodische Anordnung einer Gruppe von wenigen Stegen verstanden, wobei innerhalb der Gruppe die Stegmittenpositionen und/oder die Stegbreiten so variiert werden, daß eine Filterung von bestimmten Oberwellen-Signalanteilen erzielt wird, üblicherweise ungeraden Oberwellen. Die Filterlänge ist in dieser Filteranordnung mit der Periode der vorgesehenen Strichgruppe identisch und beträgt circa 3 bis 5 Teilungsperioden, je nach gewählter Filterausführung.

Ferner sind auch bereits Filter mit mehreren Stegen pro Teilungsperiode bekannt, z.B. aus der noch nicht veröffentlichten EP 95109701.3 der Anmelderin. Im Fall großer bzw. grober Teilungsperioden auf Seiten des Maßstabes wird hierbei eine kosinusförmige Transmissionsfunktion der Abtastplatte, die zur optimierten Filterung von Oberwellen erforderlich ist, durch mehrere feine Stege innerhalb einer Teilungsperiode angenähert. Die resultierende Filterlänge beträgt demzufolge eine Teilungsperiode.

Mit Hilfe der nach einer dieser Prinzipien ausgelegten Abtastplatte wird üblicherweise der Oberwellengehalt eines periodischen Streifenmusters gefiltert, das mittels einer periodischen Maßstabteilung auf der Abtastplatte erzeugt wird. Aufgrund konstruktiver Gegebenheiten muß mitunter jedoch die Abtastplatte im Strahlengang der Positionsmeßeinrichtung vor der Maßstabteilung angeordnet sein, das heißt die von einer Lichtquelle mit entsprechender vorgeordneter Optik emittierten Strahlenbündel passieren zunächst die Abtastplatte und gelangen erst nachfolgend auf die Maßstabteilung. Nachfolgend sei bei derartigen Anordnungen von einer inversen Abtastordnung die Rede. Derartige inverse Abtastanordnungen ergeben sich darüber hinaus beispielsweise auch bei Auflicht-Positionsmeßeinrichtungen, bei denen ebenfalls zunächst die Abtastplatte von den entsprechenden Lichtbündeln passiert wird, um ein Intensitätsmuster auf die Maßstabteilung zu projizieren. Daneben sind auch Abtastanordnungen bekannt, bei denen eine verschiebbare Maßstabteilung über eine erste Abtastteilung auf eine zweite Abtastteilung abgebildet wird, d.h. es sind zwei Abtastteilungen vorgesehen.

Im Fall sehr kleiner Abtastabstände zwischen Maßstab- und Abtastteilung, bei dem eine Intensitätsverteilung auf dem Maßstab oder einem weiteren Abtastgitter lediglich durch den Schattenwurf durch die Abtastplatte bestimmt wird, ist jede der oben erwähnten Filteranordnungen grundsätzlich auch in anderen Abtastanordnungen, beispielsweise in den erwähnten inversen Abtastanordnungen verwendbar. Vergrößern sich jedoch die Abtastabstände, so ergibt sich die Intensitätsverteilung auf dem Maßstab nicht nur durch den resultierenden Schattenwurf, vielmehr treten auch Beugungsphänomene hinzu, die die Filterwirkung der bisher bekannten Filteranordnungen beeinträchtigen bzw. zunichte machen. Grund hierfür sind die Phasenverschiebungen, die die Lichtstrahlen bei der Lichtausbreitung zwischen den verschiedenen Gittern erleiden, so daß für die verschiedenen Beugungsordnungen unterschiedliche Phasenverschiebungen resultieren. Der maximal zulässige Abtastabstand hängt nunmehr unmittelbar von der gewählten Filterlänge ab. Je größer hierbei die Filterlänge ausgelegt ist, desto größer ist auch der zulässige bzw. tolerierbare Abtastabstandsbereich. Von den oben genannten Filteranordnungen sind deshalb lediglich die adiabatischen Filteranordnungen für zumindest mittlere Abtastabstände verwendbar. Große Filterlängen wiederum weisen weitere Nachteile auf, da lokale Verschmutzungen und/oder lokale Störungen der Maßstabteilung jeweils eine große, von der Maßstabposition abhängige Phasenverschiebung der Abtastsignale bewirken. Dies ist der Fall, da die Überlagerung und damit die Balance der phasenverschobenen Signalanteile der Grundwelle gestört wird. Als Folge ergeben sich große Fehler bei der nachfolgenden Interpolation der Ausgangssignale.

Bei den meisten bekannten Positionsmeßeinrichtungen ist es lediglich erforderlich, bestimmte Oberwellen-Signalanteile zu filtern. Besonders störend wirken sich auf die Ausgangssignale die ungeradzahligen Oberwellen-Signalanteile (n=3, 5, 7, ...) aus. Die geradzahligen Oberwellen-Signalanteile (n=2, 4, 6, ...) lassen sich durch die bekannte Differenzschaltung von Gegentaktsignalen normalerweise weitgehend unterdrücken. Zudem resultiert eine Unterdrückung der geradzahligen Oberwellen-Signalanteile in bekannter Art und Weise aufgrund der Ausbildung des Maßstabes bzw. der Maßstabteilung, wenn diese eine Strichbreite in der Größenordnung der halben Teilungsperiode aufweist.

Eine weitere Möglichkeit zur Filterung ist aus der EP 0 714 015 A2 bekannt. In dieser Druckschrift wird eine spezielle Ausbildung der Abtastplatte einer inkrementalen Positionsmesseinrichtung vorgeschlagen. Hierbei werden bei einer konstanten Periode der Abtaststruktur die Breiten der durchlässigen bzw. undurchlässigen Bereiche von einer Sinusfunktion abgeleitet und variieren entsprechend.

Aufgabe der vorliegenden Erfindung ist es daher, eine Vorrichtung zur Filterung von ungeradzahligen Oberwellen-Signalanteilen in einer inkrementalen Positionsmeßeinrichtung anzugeben, die eine möglichst kurze Filterlänge aufweist und in verschiedenen Abtastanordnungen einsetzbar ist, beispielsweise auch in den erwähnten inversen Abtastanordnungen, bei der das von einer Lichtquelle kommende Licht zunächst die Abtastplatte durchtritt und erst dann auf eine Maßstabteilung gelangt. Darüber hinaus soll die gewünschte Filterwirkung unabhängig vom Abtastabstand resultieren.

Diese Aufgabe wird gelöst durch eine Vorrichtung zur Filterung von ungeraden Oberwellen-Signalanteilen mit den Merkmalen des Anspruches 1.

Weitere Maßnahmen zur vorteilhaften Ausgestaltung der erfindungsgemäßen Vorrichtung ergeben sich aus den Maßnahmen in den abhängigen Ansprüchen.

Die erfindungsgemäße Vorrichtung zur Filterung von ungeraden Oberwellen-Signalanteilen gestattet nunmehr eine abstandsunabhängige Filterung störender bzw. unerwünschter Oberwellenanteile aus dem Meßsignal, insbesondere die Filterung ungeradzahliger Oberwellen. Es resultiert damit eine Möglichkeit zur hochgenauen Weiterverarbeitung bzw. Interpolationsmöglichkeit der Ausgangssignale.

Die erfindungsgemäße Vorrichtung läßt sich je nach Anwendung darüber hinaus derart an die gewählte Meßanordnung anpassen, daß damit eine gezielte Eliminierung bestimmter, ungeradzahliger Oberwellenanteile möglich wird.

Weitere Vorteile sowie Einzelheiten der erfindungsgemäßen Vorrichtung ergeben sich aus der nachfolgenden Beschreibung von Ausführungsbeispielen anhand der beiliegenden Figuren.

Dabei zeigt

Figur 1    eine erste Ausführungsform einer Abtastplatte, die innerhalb der erfindungsgemäßen Vorrichtung verwendet wird;

Figur 2    einen Ausschnitt aus der Abtastplatte einer zweiten Ausführungsform der erfindungsgemäßen Vorrichtung;

Figur 3    einen Ausschnitt aus der Abtastplatte einer dritten Ausführungsform der erfindungsgemäßen Vorrichtung;

Figur 4    einen Ausschnitt aus der Abtastplatte einer vierten Ausführungsform der erfindungsgemäßen Vorrichtung;

Figur 5    einen Ausschnitt aus der Abtastplatte einer fünften Ausführungsform der erfindungsgemäßen Vorrichtung, bei der die Strukturelemente eine zusätzliche Transversalstruktur aufweisen.

Die vorliegende Erfindung geht von bestimmten theoretischen Überlegungen aus, die nachfolgend erläutert werden sollen.

Die resultierende Intensitätsmodulation, die ein erstes beleuchtetes Gitter mit einer periodischen Teilungsstruktur in einem bestimmten Abtastabstand erzeugt, ist üblicherweise periodisch und kann von daher als bekannte Fourrierreihe dargestellt werden, das heißt in einen Grundwellenanteil (n=1) und in verschiedene Oberwellenanteile (n=2, 3, ...) zerlegt werden. Jede der einzelnen Oberwellenkomponenten (n=2, 3...) entsteht aufgrund der Interferenz einer k-ten Beugungsordnung $E_k$ mit einer (k-n)-ten Beugungsordnung $E_{n-k}$ des ersten Gitters. Um bei einem Abtastabstand z=0 in einer normalen Abtastanordnung eine bestimmte Oberwellenkomponente mit der Ordnungszahl n zu filtern, muß die Summe der einzelnen Interferenzanteile $E_k \cdot E^*_{k-n}$ jeweils Null ergeben, wobei die Summation über k erfolgt. Die einzelnen Interferenzanteile müssen sich demnach gegenseitig aufheben. Einzelne vorhandene Interferenzanteile liefern jedoch durchaus einen nicht verschwindenden Beitrag zum Gesamtsignal.

Diese Filterbedingung ist äquivalent mit der Forderung, daß die ortsabhängige Transmissionsfunktion des Abtastgitters keine Frequenzkomponente mit der Ortsfrequenz d/n besitzt, wobei d die Periode der Intensitätsmodulation im jeweiligen Intensitätsmuster beschreibt. Im Fall der gewünschten Filterung sämtlicher Oberwellenanteile muß demzufolge bekannterweise die ortsabhängige Transmissionsfunktion des Abtastgitters kosinus- bzw. sinusförmig gewählt werden.

Wenn nunmehr durch einen endlichen Abtastabstand z > 0 beispielsweise in der erwähnten inversen Abtastanordnung die verschiedenen Beugungsordnungen und damit auch die Interferenzanteile zueinander phasenverschoben werden, dann muß diese resultierende Phasenverschiebung bei der Auslegung der Struktur der filternden Abtastplatte berücksichtigt werden. Die bisher bekannten Filterstrukturen mit kurzer Periodenlänge berücksichtigen diese Phasenverschiebung jedoch nicht. Wie bereits vorab angedeutet, wird damit die Balance der zu summierenden Interferenzanteile im Abstandsbereich

$z > \frac{1}{4} d^2/\lambda$ ($\lambda$ entspricht der verwendeten Lichtwellenlänge) zerstört, so daß sich keine brauchbare Filterwirkung mehr ergibt. Grundsätzlich läßt sich diese Phasenverschiebung jedoch auch durch eine entsprechend korrigierte Auslegung der Filterstruktur kompensieren. Dies wiederum ist aber nur für einen definierten Abtastabstand z möglich. Da bei der Entstehung von Oberwellen-Signalanteilen nunmehr auch höhere Beugungsordnungen beteiligt sind, ändert sich die resultierende Phasenverschiebung dieser Beugungsordnungen über den Abtastabstand z derart empfindlich bzw. derart schnell, daß selbst bei kleinsten Änderungen eines einmal eingestellten Abtastabstandes z die erwünschte Filterwirkung zusammenbricht. Die erforderliche Abstandsunabhängigkeit der Filterwirkung bezüglich eines vorgegebenen Oberwellen-Signalanteiles kann nur erreicht werden, wenn jeder zu dieser Oberwelle beitragende Interferenzanteil $E_k \cdot E^*_{k-n}$ für sich bzw. separat Null wird und demzufolge nicht mehr die gegenseitige Kompensation verschiedener Interferenzanteile erforderlich ist, was erfindungsgemäß durch bestimmte Maßnahmen erreicht wird. Die resultierende Phasenverschiebung verschiedener Beugungsordnungen bei sich verändernden Abtastabständen z spielt dann keine Rolle mehr. Die entsprechende Bedingung, daß Interferenzanteile $E_k \cdot E^*_{k-n}$ verschwinden bzw. Null werden, kann erfindungsgemäß für eine bestimmte Menge ungerader Oberwellen-Signalanteile (n=3, 5, ...) erfüllt werden.

In der erfindungsgemäß ausgestalteten Vorrichtung können innerhalb der Abtastplatte sowohl Phasen- als auch Amplitudenstrukturen eingesetzt werden. Hierbei ergeben sich im Fall der Auslegung der Abtaststruktur in Form von Amplitudenstrukturen Intensitätsmodulationen im Schattenwurfbereich $z \ll \frac{1}{2} d^2/\lambda$ sowie in den Abständen $z = m \cdot d^2/\lambda$ (m=1, 2, ...), d.h. in ganzzahligen Vielfachen der sogenanten Talbotabstände. im Fall der Verwendung von Phasenstrukturen, vorzugsweise mit einem Phasenhub von 90°, als Abtaststruktur resultieren hingegen Intensitätsmodulationen in den halbzahligen Talbotabständen $z = (m+1/2) \cdot d^2/\lambda$ (m=1, 2, ...).

In den beiden Fällen ist jeweils die Maßstabteilung vorzugsweise im Bereich der ganz- oder halbzahligen Talbotabstände von der Abtastplatte entfernt angeordnet, bzw. zumindest in einem Bereich wo jeweils eine hohe Intersitätsmodulation resultiert. Die erfindungsgemäße Ausgestaltung der Abtastplatte läßt sich demzufolge sowohl mit einer Amplituden- als auch mit einer Phasenstruktur realisieren. Im nachfolgend erläuterten Ausführungsbeispiel werden die Stege einer Phasenstruktur bzw. die Striche einer Amplitudenstruktur verallgemeinert als Strukturelemente bezeichnet. Zwischen den Strukturelementen "Stege" und "Striche" sind im Fall der Phasenstruktur und der Amplitudenstruktur jeweils als Lücken bezeichnete weitere Strukturelemente vorgesehen.

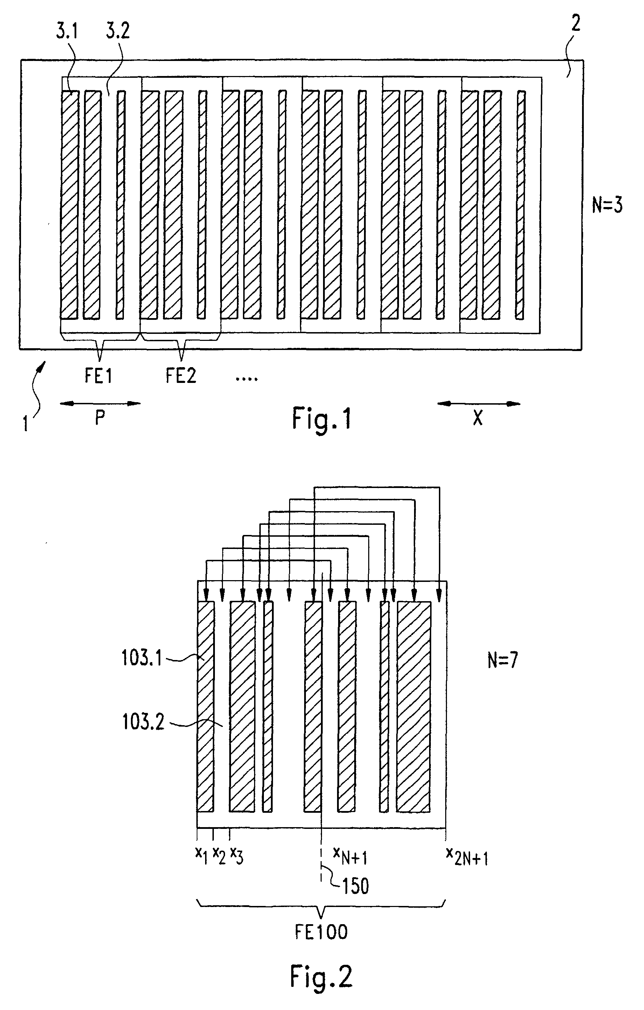

Ein erstes Ausführungsbeispiel einer erfindungsgemäß ausgestalteten Abtastplatte 1 der erfindungsgemäßen Vorrichtung ist in Figur 1 dargestellt; eine vergrößerte Darstellung eines Ausschnittes aus einer weiteren erfindungsgemäß ausgeführten Abtastplatte zeigt Figur 2.

Die Abtastplatte 1 in Figur 1 besteht aus einer in Meßrichtung x periodischen Anordnung mehrerer identischer Filterelemente FE1, FE2, ... angeordnet auf einem geeigneten Trägersubstrat 2. Als Meßrichtung x sei hierbei die Richtung der Relativverschiebung der Abtastplatte und der - nicht dargestellten-Maßstabteilung bezeichnet. Die Filterelemente FE1, FE2, ... wiederum enthalten jeweils mehrere Strukturelemente 3.1, 3.2, die je nachdem ob eine Phasen- oder aber eine Amplitudenstruktur eingesetzt wird, entsprechend als Steg-Lücke- oder Strich-Lücke-Abfolge ausgelegt ist. Die gewählte Breite der Filterelemente FE1, FE2, ... sei nachfolgend als Überstrukturperiode P bezeichnet und ist erfindungsgemäß als ungeradzahliges Vielfaches N einer Teilungsperiode $d_A$ gewählt, d.h. $P = N \cdot d_A$, wobei N > 1

EP 0 819 915 B1

gilt. Hierbei stellt die Teilungsperiode $d_A$ diejenige Teilungsperiode der zu ersetzenden, herkömmlichen Abtastplatte ohne Filterwirkung dar. Üblicherweise bzw. in einer vorteilhaften Ausführungsform ist die Teilungsperiode $d_A$ der - fiktiven - Abtastplatte ohne Filterwirkung identisch mit der Teilungsperiode $d_M$ der - nicht dargestellten - Maßstabteilung. Eine derartige Dimensionierung von $d_A$ ist etwa im Fall der kollimierten Beleuchtung von Abtastplatte und Maßstabteilung sinnvoll. Grundsätzlich kann insbesondere im Fall anderer Beleuchtungskonfigurationen wie z.B. divergierender Beleuchtung von Abtastplatte und Maßstabteilung jedoch eine Teilungsperiode $d_A$ gewählt werden, die nicht identisch mit der Teilungsperiode $d_M$ des Maßstabteilung ist. Da nunmehr erfindungsgemäß die Überstrukturperiode $P = N \cdot d_A$ der Abtastplatte 1 größer gewählt ist als die Periode $d_A$, ergeben sich zusätzliche Beugungsordnungen $E_{\kappa/N}$ mit $\kappa=(... -2, -1, 1, 2, ...)$. Diese zusätzlich entstehenden Beugungsordnungen $E_{\kappa/N}$, liegen zwischen den Beugungsordnungen $E_k$ mit $k=... -2, -1, 0, 1, 2, ...$ des - fiktiven - Abtastgitters bzw. der fiktiven Abtastplatte ohne Filterungseigenschaften. Diejenigen Beugungsordnungen, die letztlich über die erfindungsgemäß ausgestaltete Abtastplatte 1 resultieren, werden durch die nicht ganzzahligen Indizes $\kappa/N$ bezeichnet, wobei N wiederum diejenige ungerade Zahl darstellt, die die Anzahl von Teilungsperioden $d_A$ innerhalb der Überstrukturperiode P angibt. Um nunmehr die gewünschte abstandsunabhängige Filterung des Oberwellen-Signalanteils n zu erreichen, muß wie vorab erläutert, jeder der Interferenzanteile $E_{\kappa/N} \cdot E^*_{\kappa/N-n}$ mit $\kappa=(..., -2, 1, 0, 1, 2...)$ gleich Null sein. Eine Lösung dieses Problems ergibt sich erfindungsgemäß unter bestimmten Symmetrie-Überlegungen.

Demnach umfaßt die Abtastplatte 1 erfindungsgemäß Filterelemente FE1, FE2,..., die jeweils aus zwei Hälften bestehen, die eine Breite $N \cdot d_A/2$ aufweisen. Beide Hälften jedes Filterelementes FE1, FE2,.. wiederum sind zueinander komplementär ausgeführt bzw. strukturiert.

Zur näheren Erläuterung dieser erforderlichen Eigenschaft der Filterelemente sei auf einen Ausschnitt einer weiteren Ausführungsform der Abtastplatte gemäß Figur 2 verwiesen. Unter der erwähnten komplementären Ausgestaltung der beiden Hälften der Filterelemente sei dabei verstanden, daß die Struktur der ersten Hälfte des Filterelements FE100 in die Struktur der zweiten Hälfte des Filterelements FE100 umgewandelt werden kann, indem jeder Steg 103.1 bzw. opake Strich 103.1 durch eine Lücke 103.2 mit gleicher Breite ersetzt wird und umgekehrt, d.h. daß jede Lücke 103.2 durch einen Steg 103.1 bzw. opaken Strich 103.1 gleicher Breite ersetzt wird. Jedes Filterelement FE100 besteht somit aus zueinander komplementären Hälften, die durch eine fiktive Trennungslinie 150 getrennt sind. Zur Veranschaulichung der komplementären Struktur der beiden Hälften des dargestellten Filterelementes FE100 wurden die jeweils komplementär ausgebildeten Strukturelemente beider Hälften mit den darüber angeordneten Pfeilen verbunden.

Aufgrund dieser Ausbildung der Filterelemente FE1, FE2 bzw. FE 100 lassen sich alle Beugungsordnungen $E_{\kappa/N}$ mit geradem $\kappa$, ausgenommen $\kappa=0$, unterdrücken. Dieser Zusammenhang ist im übrigen bekannt für die einfachste periodische und komplementäre Struktur mit N=1. Diese entspäche etwa einem Phasen oder Amplitudengitter, das im Verhältnis 1:1 geteilt ist und aus einer periodischen Anordnung von Stegen bzw. Strichen und gleich breiten Lücken besteht.

Aufgrund der komplementären Ausbildung der Filterelemente im Fall N>1 verschwinden fast alle der möglichen Inter-ferenzanteile $E_{\kappa/N} \cdot E^*_{\kappa/N-n}$, die die unerwünschten, ungeraden Oberwellen-Signalanteile erzeugen. Es werden stets die Beugungsordnungen $E_{\kappa/N}$ mit ungeradem $\kappa$ mit unterdrückten Beugungsordnungen $E_{\kappa'/N}$ mit geradem $\kappa'=\kappa-n \cdot N$ (hierbei $n \cdot N$ immer ungerade) zur Interferenz gebracht und umgekehrt.

Die noch verbleibenden Interferenzanteile, die weiterhin einen Beitrag zur n-ten Oberwelle liefern, sind $E_n \cdot E^*_0$ und $E_{-n} \cdot E^*_0$. Um auch diese verbleibenden Interferenzanteile zu beseitigen, ist eine weitere Bedingung bei der Ausgestaltung der Filterelemente bzw. der Filterelement-Hälften zu berücksichtigen. So müssen zu diesem Zweck die Beugungsordnungen $E_n$ bzw. $E_{-n}$ mit einem Index n aller zu filternden, ungeraden Oberwellen-Signalanteile unterdrückt werden. Hierzu muß die Lage der Strukturelemente innerhalb einer Hälfte des Filterelements entsprechend gewählt werden. Dies stellt jedoch eine dem einschlägigen Fachmann geläufige Aufgabe dar . Die dazu erforderliche Bestimmung der Kantenpositionen der Strukturelemente innerhalb einer Hälfte des Filterelements sei nachfolgend anhand der Figur 2 deshalb lediglich kurz erläutert.

Mit $x_I$ (I=1, 2, 3,.....N) seien dabei die Kantenpositionen der Strukturelemente in der linken Hälfte des Filterelements FE100 bezeichnet. Das Bezugssystem ist zudem so gewählt, daß die Trennungslinie 150 der Position mit der Koordinate Null entspricht. Innerhalb der linken Hälfte des Filterelementes FE100 sind in Verbindung mit der gewählten Terminologie demzufolge die Kantenpositionen von $x_2$ bis $x_N$ zu bestimmen, die Kantenposition $x_{N+1}$ ist durch die Lage der Trennungslinie 150 gegeben. Die Kantenposition für $x_1$ ergibt sich aufgrund der bereits erläuterten Bestimmungsgleichung für die Periodizität P und der als Null gewählten Bezugskoordinate der Trennungslinie 150 als $x_1 = -N \cdot d_A/2$. Die nachfolgenden Kantenpositionen $X_2 ... X_N$ der linken Hälfte des Filterelementes FE 100 hingegen sind so zu wählen, daß die vorgegebenen Beugungsordnungen n unterdrückt werden. Hierzu muß für alle zu filternden, ungeraden Oberwellenanteile n die folgende Gleichung (1) erfüllt sein:

$$\sum_{l=1}^{N} (-1)^l\, e^{\,2\pi i n x_l / d_A} = 0 \qquad\qquad (\text{Gl. 1})$$

Unter Berücksichtigung der oben erläuterten Symmetriebedingungen für die linke und rechte Hälfte des Filterelementes FE100 ergeben sich aus den bestimmten Kantenpositionen der linken Hälfte des Filterelementes FE100 auch die Kantenpositionen der komplementär zur Trennungslinie 150 angeordneten Kantenpositionen der rechten Hälfte des Filterelementes FE100.

Die erfindungsgemäße Ausgestaltung der Filterelemente über die komplementäre Ausbildung der beiden Filterelement-Hälften in Verbindung mit der ungeraden Anzahl von Teilungsperioden $d_A$ pro Filterelement gewährleistet somit die grundlegende Voraussetzung für die abstandsunabhängige Filterung ungeradzahliger Oberwellen-Signalanteile.

Für eine Anzahl M von zu filternden Oberwellen muß jeweils die komplexe Gleichung (1) erfüllt sein. Dem stehen N-1 zu bestimmende Kantenpositionen $x_2$, $x_3$, ...$x_N$ gegenüber. Um mindestens eine Lösung zu erhalten, muß deshalb folgende Relation bzw. Gleichung (2) erfüllt sein:

$$N - 1 \geq 2M \qquad\qquad\qquad (\text{Gl. 2})$$

Vorzugsweise wählt man den Parameter N so klein wie dies durch die Gleichung (2) gerade noch möglich ist, was jedoch keine zwingende Bedingung für die erfindungsemäße Filterung darstellt..

Beim in Figur 1 dargestellten Ausführungsbeispiel der Abtastplatte 1 ist eine Filterung der 3. Oberwelle vorgesehen (M=1), auf Grundlage von Gl. (2) wurde demzufolge N=3 gewählt. Auf der Abtastplatte 1 sind darüber hinaus im Regelfall mehrere derart ausgebildete Abtastfelder vorgesehen, die in Figur 1 jedoch nicht dargestellt sind. Im Ausführungsbeispiel der Figur 1 sind in Meßrichtung x ferner insgesamt sechs Filterelemente FE1, FE2,.. angeordnet. Typische Größenordnungen für die Anzahl vorgesehener Filterelemente pro Abtastfeld liegen zwischen 5 und 10. Je nach Abtastkonfiguration können jedoch auch andere Parameter gewählt werden.

Die in Figur 2 dargestellte Ausbildung der Filterelemente gewährleistet eine Filterung der 3., 5. und 7. Oberwelle, unter Berücksichtigung von Gl. (2) wurde N=7 gewählt.

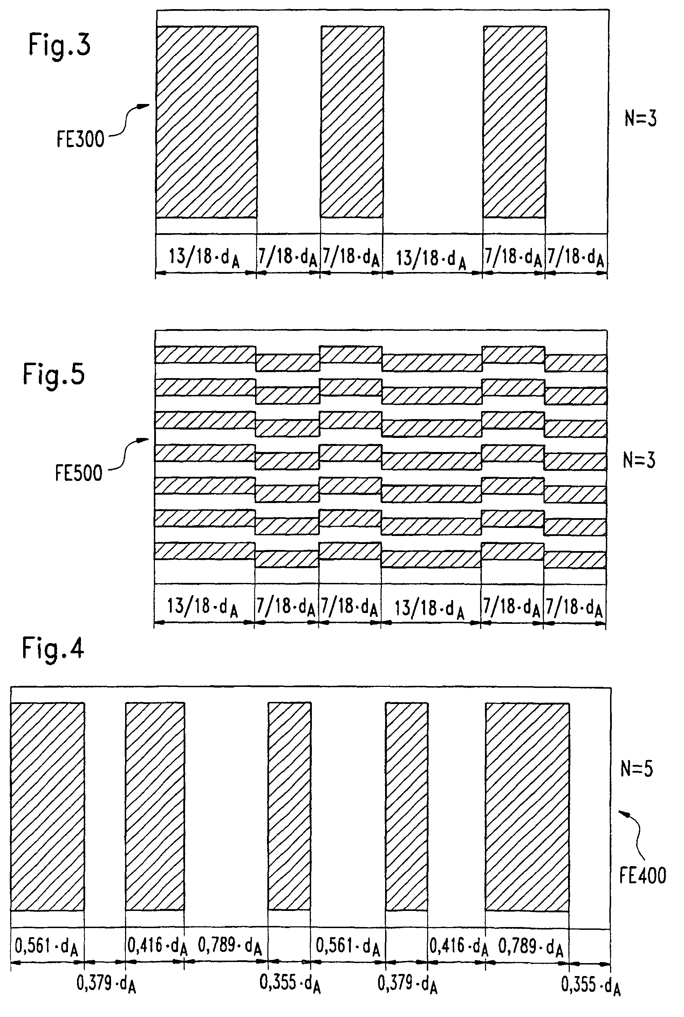

Weitere erfindungsgemäße Ausführungsformen der vorgesehenen Filterelemente sind in den Figuren 3 und 4 dargestellt. Darüber hinaus ist in den Figuren 3 und 4 auch explizit die Breite der einzelnen Strukturelemente angegeben, jeweils in Bruchteilen der Größe $d_A$, die wie vorab erläutert die Teilungsperiode der zu ersetzenden, herkömmlichen Abtastplatte ohne Filterwirkung darstellt, die z.B. identisch mit der Teilungsperiode der Maßstabteilung sein kann. In Figur 3 ist demzufolge eine Breite $P=3d_A$ des Filterelementes FE300 vorgesehen, d.h. es wurde N=3 gewählt; es ergibt sich eine Filterung der dritten Oberwelle. Die Bestimmung der Breiten der einzelnen Strukturelemente ist gleichbedeutend mit der Bestimmung der Kantenpositionen der Strukturelemente zumindest in der linken Hälfte des Filterlementes FE300. Hierzu wurde demnach die oben angegebene Gleichung (1) für die zu filternde dritte Oberwelle gelöst.

Im Ausführungsbeispiel der Figur 4 gewähleistet das dargestellte Filterelement FE400 bzw. die periodische Aneinanderreihung derartiger Filterelemente die gleichzeitige Filterung der dritten und fünften Oberwelle; der Parameter N wurde demnach N=5 gewählt. Die Bestimmung der Breiten der einzelnen Strukturelemente, angegeben in Bruchteilen $d_A$, bzw. die Bestimmung der entsprechenden Kantenpositionen erfolgte wiederum durch Lösen der Gleichung (1) für die zu filternde dritte und fünfte Oberwelle. Die Breite P eines Filterelementes FE400 beträgt $P=5\,d_A$.

Neben der erfindungsgemäßen Strukturierung der Abtastplatte bzw. des Abtastgitters in Meßrichtung x als Abfolge von Stegen bzw. Strichen und Lücken, können die einzelnen Strukturelemente darüber hinaus auch als beliebige beugende Strukturen ausgeführt werden. So ist es etwa möglich, den Strukturelementen auch eine transversal zur Meßrichtung x orientierte periodische Struktur zuzuordnen. Ein entsprechend ausgebildetes Filterelement FE500 ist in Figur 5 dargestellt. Der Ausbildung dieses Filterelementes FE500 lag dabei die Struktur des Ausführungsbeispiels aus Figur 3 zugrunde, d.h. mit N=3 und der entsprechenden Breite der einzelnen Strukturelemente wird die Filterung der dritten Oberwelle erreicht. Ferner weisen die einzelnen Strukturelemente auch allesamt transversal zur Meßrichtung orientierte, beugende Strukturen auf, die eine Ablenkung der durchtretenden Teilstrahlenbündel in transversaler Richtung bewirken. In diesem Zusammenhang sei ergänzend auf die noch nicht veröffentlichte Anmeldung DE 195 11 068.4 der Anmelderin verwiesen.

Die erfindungsgemäße Vorrichtung läßt sich somit vielfach abwandeln und an bestimmte Anforderungen flexibel anpassen. Beispielsweise ist der Einsatz in Positionsmeßeinrichtungen zur Erfassung von Linear-Bewegungen ebenso möglich wie in Positionsmeßeinrichtungen zur Erfassung von Rotationsbewegungen usw..

**Patentansprüche**

1.  Vorrichtung zur Filterung von ungeradzahligen Oberwellen-Signalanteilen aus einem periodischen Signal, das aus der Abtastung einer periodischen Maßstabteilung mit einer Abtastplatte (1) erzeugt wird ,

    -   wobei die Abtastplatte (1) eine periodische Abfolge einzelner Filterelemente (FE1, FE2, FE100, FE300, FE400, FE500) in Meßrichtung (x) umfaßt und für die resultierende Periode P der Filterelemente die Bedingung P = N • $d_A$ gilt, wobei N eine ungerade ganze Zahl mit N>1 ist und $d_A$ die Periode einer Abtastteilung ohne Filterwirkung darstellt und
    -   in den Filterelementen (FE1, FE2, FE100, FE300, FE400, FE500) eine symmetrische Anordnung von Strukturelementen (3.1, 3.2, 103.1, 103.2) vorgesehen ist derart, daß innerhalb eines Filterelements (FE1, FE2, FE100, FE300, FE400, FE500) jeweils zwei komplementär ausgebildete Hälften mit Strukturelementen (3.1, 3.2, 103.1, 103.2) vorgesehen sind.

2.  Vorrichtung nach Anspruch 1, wobei innerhalb der Filterelement-Hälften die Koordinaten $x_l$ der Strukturelement-kanten für jede zu filternde Oberwelle n folgender Bedingung genügen, so daß die zu jeder filternden Oberwelle n gehörenden Beugungsordnungen unterdrückt werden:

$$\sum_{l=1}^{N} (-1)^l \, e^{2\pi i n x_l / d_A} = 0$$

3.  Vorrichtung nach Anspruch 1, wobei die Zahl N der Teilungsperioden $d_A$ pro Filterelement (FE1, FE2, FE100, FE300, FE400, FE500) und die Anzahl M der zu filternden Oberwellen folgende Bestimmungsgleichung erfüllt:

$$N - 1 \geq 2M \qquad\qquad\qquad (Gl. 2)$$

4.  Vorrichtung nach Anspruch 1, wobei die Periode der Abtastteilung $d_A$ der Periode der Maßstabteilung entspricht.

5.  Vorrichtung nach Anspruch 1, wobei die Abtastplatte als Phasenstruktur ausgebildet ist und die Strukturelemente (3.1, 3.2, 103.1, 103.2) der Filterelemente (FE1, FE2, FE100, FE300, FE400, FE500) als Abfolge von Stegen und Lücken ausgebildet sind.

6.  Vorrichtung nach Anspruch 1, wobei die Abtastplatte als Amplitudenstruktur ausgebildet ist und die Strukturelemente (3.1, 3.2, 103.1, 103.2) der Filterelemente (FE1, FE2, FE100, FE300, FE400, FE500) als Abfolge von undurchlässigen Strichen und durchlässigen Lücken ausgebildet sind.

7.  Positionsmeßeinrichtung zur Erfassung von Linear- oder Rotationsbewegungen, mit einer Vorrichtung zur Filterung von ungeradzahligen Oberwellen-Signalanteilen, die gemäß einem der Ansprüche 1-6 ausgebildet ist.

8.  Positionsmeßeinrichtung nach Anspruch 7, die ferner eine Lichtquelle, eine Maßstabteilung und eine optionale weitere Abtastplatte umfasst, wobei das Licht der Lichtquelle zunächst eine Abtastplatte (1) gemäß Anspruch 1 durchtritt, bevor es auf die Maßstabteilung oder die weitere Abtastplatte gelangt.

9.  Positionsmeßeinrichtung nach Anspruch 8, wobei die Maßstabteilung oder die weitere Abtastteilung in der Nähe ganz- oder halbzahliger Talbotabstände von der Abtastplatte (1) entfernt angeordnet ist.

**Claims**

1.  Device for filtering odd-numbered harmonic signal components from a periodic signal which is generated from scanning a periodic scale division with a scanner plate (1),

    -   the scanner plate (1) comprising a periodic sequence of individual filter elements (FE1, FE2, FE100, FE300, FE400, FE500) in the measuring direction (x) and the condition $P = N{\cdot}d_A$ being valid for the resulting period P of the filter elements, N being an odd integer with N > 1 and $d_A$ representing the period of a scanning division without filtering effect, and

-   a symmetrical arrangement of structural elements (3.1, 3.2, 103.1, 103.2) being provided in the filter elements (FE1, FE2, FE100, FE300, FE400, FE500) in such a manner that within one filter element (FE1, FE2, FE100, FE300, FE400, FE500) there are provided respectively two complementarily configured halves with structural elements (3.1, 3.2, 103.1, 103.2).

2.  Device according to claim 1, the coordinates $x_1$ of the structural element edges for each harmonic n to be filtered meeting, within the filter element halves, the following condition, so that the diffraction orders belonging to each filtering harmonic n are suppressed:

$$\sum_{l=1}^{N} (-1)^l\, e^{\,2\pi i n x_l / d_A} = 0$$

3.  Device according to claim 1, the number N of division periods $d_A$ per filter element (FE1, FE2, FE100, FE300, FE400, FE500) and the number M of harmonics to be filtered fulfilling the following conditional equation:

$$N - 1 \geq 2M$$

4.  Device according to claim 1, the period of the scanning division $d_A$ corresponding to the period of the scale division.

5.  Device according to claim 1, the scanner plate being configured as a phase structure and the structural elements (3.1, 3.2, 103.1, 103.2) of the filter elements (FE1, FE2, FE100, FE300, FE400, FE500) being configured as a sequence of webs and gaps.

6.  Device according to claim 1, the scanner plate being configured as an amplitude structure and the structural elements (3.1, 3.2, 103.1, 103.2) of the filter elements (FE1, FE2, FE100, FE300, FE400, FE500) being configured as a sequence of opaque lines and transparent gaps.

7.  Position measuring device for detecting linear and rotational movements, having a device for filtering odd-numbered harmonic signal components, which is configured according to one of the claims 1 - 6.

8.  Position measuring device according to claim 7, which furthermore comprises a light source, a scale division and an optional further scanner plate, the light of the light source first penetrating a scanner plate (1) according to claim 1, before said light reaches the scale division or the further scanner plate.

9.  Position measuring device according to claim 8, the scale division or the further scanner division being disposed at a distance from the scanner plate (1) close to whole- or half-integral Talbot distances.

**Revendications**

1.  Dispositif de filtrage de composantes harmoniques d'ordres impairs d'un signal périodique produit par exploration d'une division périodique de règle de mesure à l'aide d'une plaque d'exploration (1), dans lequel

    -   la plaque d'exploration (1) comprend une suite périodique d'éléments de filtre individuels (FE1, FE2, FE100, FE300, FE400, FE500) dans la direction de mesure (x) et la période P résultante des éléments de filtre répond à la condition $P = N{\cdot}d_A$, où N est un nombre entier impair avec N>1 et $d_A$ représente la période d'une division d'exploration sans effet de filtrage, et
    -   un agencement symétrique d'éléments de structure (3.1, 3.2, 103.1, 103.2) est prévu dans les éléments de filtre (FE1, FE2, FE100, FE300, FE400, FE500) de telle manière qu'à l'intérieur de chaque élément de filtre (FE1, FE2, FE100, FE300, FE400, FE500) soient prévues deux moitiés complémentaires avec des d'éléments de structure (3.1, 3.2, 103.1, 103.2).

2. Dispositif suivant la revendication 1, dans lequel à l'intérieur des moitiés d'éléments de filtre, les coordonnées $x_l$ des bords des éléments de structure, pour chaque harmonique n à filtrer, répondent à la condition suivante, de telle sorte que les ordres de diffraction appartenant à chaque harmonique n à filtrer soient supprimés:

$$\sum_{l=1}^{N} (-1)^l e^{2\pi i n x_l / d_A} = 0$$

3. Dispositif suivant la revendication 1, dans lequel le nombre N de périodes de division $d_A$ par élément de filtre (FE1, FE2, FE100, FE300, FE400, FE500) et le nombre M des harmoniques à filtrer répondent à la condition suivante:

$$N - 1 \geq 2M$$

4. Dispositif suivant la revendication 1, dans lequel la période de la division d'exploration $d_A$ correspond à la période de la division de la règle de mesure.

5. Dispositif suivant la revendication 1, dans lequel la plaque d'exploration est réalisée sous forme de structure de phase et les éléments de structure (3.1, 3.2, 103.1, 103.2) des éléments de filtre (FE1, FE2, FE100, FE300, FE400, FE500) sont réalisés sous forme de suite de barrettes et d'intervalles.

6. Dispositif suivant la revendication 1, dans lequel el la plaque d'exploration est réalisée sous forme de structure d'amplitude et les éléments de structure (3.1, 3.2, 103.1, 103.2) des éléments de filtre (FE1, FE2, FE100, FE300, FE400, FE500) sont réalisés sous forme de suite de traits imperméables et d'intervalles perméables.

7. Dispositif de mesure de position pour déceler des mouvements linéaires ou de rotation, avec un dispositif de filtrage de composantes harmoniques d'ordres impairs d'un signal, réalisé suivant l'une des revendications 1-6.

8. Dispositif de mesure de position suivant la revendication 7, qui comprend en outre une source de lumière, une division de règle de mesure et une plaque d'exploration supplémentaire optionnelle, la lumière de la source de lumière traversant d'abord une plaque d'exploration suivant la revendication 1 avant de parvenir sur la division de règle de mesure ou la plaque d'exploration supplémentaire.

9. Dispositif de mesure de position suivant la revendication 8, dans lequel la division de règle de mesure ou la division d'exploration supplémentaire est éloignée de la plaque d'exploration (1) d'une distance correspondant sensiblement à des multiples entiers ou demi-entiers des distances de Talbot.

Fig.1

Fig.2

Fig.3

FE300

N=3

13/18·d$_A$  |  7/18·d$_A$  |  7/18·d$_A$  |  13/18·d$_A$  |  7/18·d$_A$  |  7/18·d$_A$

Fig.5

FE500

N=3

13/18·d$_A$  |  7/18·d$_A$  |  7/18·d$_A$  |  13/18·d$_A$  |  7/18·d$_A$  |  7/18·d$_A$

Fig.4

N=5

FE400

0,561·d$_A$  |  0,416·d$_A$  |  0,789·d$_A$  |  0,561·d$_A$  |  0,416·d$_A$  |  0,789·d$_A$

0,379·d$_A$  |  0,355·d$_A$  |  0,379·d$_A$  |  0,355·d$_A$